# DEMANDE DE BREVET EUROPEEN

(11) **EP 4 464 440 A1**
(43) Date de publication de la demande: **20.11.2024**
(21) Numéro de dépôt: 23174055.6
(22) Date de dépôt: 17.05.2023
(51) Int. Cl.: B23B 13/08, B23B 13/12

(54) **DISPOSITIF DE GUIDAGE POUR RAVITAILLEUR DE BARRES**

(71) Demandeur: LNS Management Sàrl, 2534 Orvin (CH)
(72) Inventeur: Pluvinage, Loïc, 2555 Brügg (CH); Marmy, Matthieu, 2854 Bassecourt (CH); Towers, Jamie, 2502 Bienne (CH); Bonhôte, Philippe, 1450 Sainte-Croix (CH); Fatio, Benoît, 1880 Bex (CH); Leresche, David, 1462 Yvonand (CH)
(74) Mandataire: BOVARD AG

(57) **Abrégé**

Dispositif de guidage pour ravitailleur de barres, comprenant au moins un palier (12) définissant un canal de guidage (14) à contour globalement fermé, s'étendant en continu dans une direction longitudinale (Z) et présentant, dans un plan transversal (X-Y) à la direction longitudinale (Z), une section dite section de guidage, et un système d'ajustement de ladite section de guidage. Selon l'invention, le palier (12) comprend au moins trois segments de guidage (30) délimitant entre eux un canal formant canal de guidage (14) et le système d'ajustement (20) est configuré pour déplacer les segments de guidage (30) les uns par rapport aux autres de sorte à ajuster une dimension transversale du canal (14).

## Description

### Domaine technique de l'invention

La présente invention concerne un dispositif de guidage destiné à être intégré dans un ravitailleur de barres approvisionnant en barres une machine-outil, typiquement un tour.

### Arrière-plan de l'invention

Dans le domaine de l'industrie mécanique, un ravitailleur de barres, aussi connu sous le nom de chargeur de barres, est un dispositif utilisé usuellement pour alimenter en barres relativement longues une machine-outil (ci-après machine) telle qu'un tour automatique. Des pièces, issues du traitement de la barre notamment par perçage, usinage, etc., sont obtenues en aval de la machine.

La barre est entraînée vers la machine-outil par un élément poussoir du ravitailleur et guidée dans ce déplacement par un dispositif de guidage. La barre tourne à l'intérieur du dispositif de guidage sous l'effet du couple d'entrainement fourni par la broche de la machine-outil.

Un dispositif classique de guidage pour ravitailleur de barres comprend un palier principal relativement long (de l'ordre de 2 mètres à 4 mètres) ou un ensemble de paliers principaux plus courts et alignés. Dans certains cas, le dispositif de guidage se termine, à son extrémité aval jouxtant la machine-outil, par un palier particulier que l'on appelle la lunette.

Le ou les paliers, qui sont formés chacun d'un ou plusieurs éléments de guidage, définissent un passage adapté à un diamètre de barre.

Les éléments de guidage ont non seulement un rôle de guidage des barres, mais ils amortissent aussi les vibrations et absorbent les chocs.

Pour cela, la section de passage doit être adaptée pour maximiser la stabilité de guidage de la barre en optimisant le jeu entre celle-ci et les éléments de guidage. Un jeu inadapté entre les barres et les éléments de guidage engendre en outre une consommation accrue d'énergie pour entraîner la barre.

Or, le diamètre des barres à traiter peut varier fréquemment sur les lignes de production, en fonction des pièces devant être fabriquées. La section de passage doit donc pouvoir être facilement modifiée.

On connaît des ravitailleurs de barres dans lesquels il est nécessaire de remplacer les éléments de guidage pour s'adapter à la forme et au diamètre des barres. Cette opération est fastidieuse, et implique des arrêts de production fréquents. Elle engendre par ailleurs des coûts importants pour l'acquisition et la manutention des différents éléments de guidage. Enfin, elle nécessite l'aménagement d'importants espaces de stockage pour les éléments de guidage qui peuvent être nombreux si l'on souhaite pouvoir s'adapter à un grand nombre de dimensions de barres.

On connaît également des ravitailleurs de barres dans lesquels le ou les éléments de guidage formant le passage pour les barres sont déplaçables et/ou déformables, de sorte à ajuster la section de passage.

Des documents DE7824576U1, EP0333072A2, US3927585A, on connait par exemple des dispositifs de guidage à courroies ou roues ou cages d'écureuil déformables, mais ces systèmes ont la particularité de transmettre une inertie non-négligeable en rotation à la barre guidée, ce qui péjore le comportement dynamique de la barre en rotation. Cet effet peut être particulièrement rédhibitoire pour les barres de petits diamètres.

Des systèmes sans inertie rapportée sur la barre autre que celle liée aux frottements des surfaces et à l'entraînement de l'huile, ont également été proposés. Il s'agit de systèmes à paliers lisses ou hydrodynamiques.

Des documents tels que WO2008089915A1, EP0485902A1 ou US 2001/0047924 A1, on connaît par exemple des dispositifs de guidage dans lesquels des secteurs de paliers ou des paliers décalés les uns des autres dans la direction longitudinale du canal sont imbriqués de façon modulable. Mais ce type de solutions induit des efforts de flexion et de cisaillement dans la barre qui impactent négativement la qualité du guidage et n'est en outre pas optimal du point de vue de la lubrification.

La demande WO 2021/048426 A1 décrit également un dispositif comportant des paliers déformables, mais un tel dispositif offre des capacités d'adaptation diamétrales très limitées, bien inférieures au besoin des ravitailleurs.

### Résumé de l'invention

La présente invention est destinée à pallier au moins une partie des inconvénients des dispositifs de guidage selon l'art antérieur, en proposant notamment un dispositif adaptable à différents diamètres, formes ou tailles de barres par une opération simple d'ajustement et qui en outre possède de bonnes propriétés de guidage.

Cet objectif est en particulier réalisé au moyen du dispositif de guidage selon la revendication 1. Des revendications dépendantes définissent des modes de réalisation plus spécifiques de la présente invention.

Un dispositif de guidage pour ravitailleur de barres selon l'invention comprend :
- au moins un palier définissant un canal de guidage à contour globalement fermé s'étendant en continu dans une direction longitudinale et présentant, dans un plan transversal orthogonal à cette direction longitudinale, une section dite section de guidage, et
- un système d'ajustement de ladite section de guidage.
Le palier comprend au moins trois segments de guidage munis chacun d'une face primaire, et une partie active de chaque face primaire délimite, avec les parties actives des faces primaires des autres segments de guidage, un canal formant canal de guidage, et le système d'ajustement est configuré pour déplacer les segments de guidage les uns par rapport aux autres de sorte à ajuster une dimension transversale de chaque partie active.

Pour la suite, on définit l'axe longitudinal d'un canal de guidage comme l'axe dudit canal dans une configuration donnée, s'étendant dans la direction longitudinale et passant par le centre du plus grand cercle inscrit à l'intérieur de la section de guidage, dans ladite configuration de fonctionnement. Une fois le dispositif de guidage associé à une machine de traitement, l'axe longitudinal du canal de guidage est parallèle et éventuellement confondu avec l'axe de l'arbre machine. L'axe longitudinal d'un canal de guidage peut rester fixe dans toutes les configurations de fonctionnement du palier, ou peut être déplacé transversalement selon ses configurations.

Selon l'invention, les segments de guidage forment une sorte d'iris mécanique ayant une ouverture centrale formant le canal de guidage et dont les dimensions peuvent être ajustées par déplacement des segments les uns par rapport aux autres.

En fonctionnement, le canal de guidage a un contour globalement fermé, c'est-à-dire que le contour de sa section de guidage dans n'importe quel plan transversal est continu aux éventuels jeux de fonctionnement près entre les segments adjacents. Chaque face (i.e. partie active d'une face primaire) du canal a toujours une face en vis-à-vis dans une direction orthogonale à l'axe longitudinal du canal et passant par cet axe.

Un jeu fonctionnel entre les segments adjacents, s'il existe, est typiquement 50 fois inférieur au diamètre nominal du canal de guidage, de préférence 500 fois inférieur au diamètre nominal du canal de guidage. Le diamètre nominal d'un canal de guidage doit être entendu comme le diamètre du plus grand cercle inscrit à l'intérieur de la plus grande section de guidage du canal (i.e. de la plus grande section du canal à l'intérieur de sa gamme de réglage), autrement dit le diamètre de la plus large barre que le canal de guidage peut traiter.

Dans le contexte de l'invention, un jeu fonctionnel est par exemple compris entre 10 et 500 microns.

Selon l'invention, le palier s'étend en continu dans la direction longitudinale, autrement dit il n'y a pas d'interruption de guidage à l'intérieur du palier dans le sens longitudinal et la section de guidage reste constante sur toute la longueur du palier.

Le dispositif de guidage selon l'invention permet une grande capacité d'adaptation en diamètres, avec un rapport qui peut être supérieur à 10 :1 entre le plus grand et le plus petit diamètre pour un même palier et théoriquement même infini.

Le dispositif est par ailleurs mécaniquement simple à réaliser, et n'ajoute pas significativement d'inertie à la barre entrainée, autre que celle liée à l'entrainement de l'huile dans le cas d'un palier hydrodynamique. La rotation de la barre à l'intérieur du dispositif de guidage n'entraîne pas la mise en mouvement d'autres pièces.

Le dispositif de guidage comprend un unique palier ou une pluralité de paliers alignés longitudinalement, et en contact ou non les uns avec les autres.

Dans la suite, on appelle passage de guidage un ensemble formé par la juxtaposition de canaux de guidage successifs.

Les différents paliers d'un tel passage de guidage peuvent être identiques ou différents.

Leurs axes longitudinaux peuvent être confondus, ou non.

Les paliers du dispositif peuvent notamment être agencés de sorte que le passage de guidage soit globalement fermé sur toute sa longueur, quelle que soit la configuration de fonctionnement.

Le système d'ajustement du dispositif de guidage peut être configuré pour ajuster de manière sélective la section de guidage de chaque palier du dispositif, indépendamment des autres paliers, et/ou pour ajuster simultanément les sections de guidage de tous les paliers.

L'ajustement opéré par le système d'ajustement est un ajustement actif, qui peut notamment se faire avant le contact des segments de paliers avec la barre à guider.

Pour opérer le déplacement relatif des segments de guidage d'un palier, le système d'ajustement peut être configuré pour déplacer au moins un segment de guidage - et de préférence chaque segment:
- soit uniquement en translation, typiquement dans une direction transversale (i.e. ayant au moins une composante transversale et sans composante longitudinale)
- soit uniquement en rotation, typiquement autour d'un axe de rotation s'étendant dans la direction longitudinale,
- soit en translation et en rotation.

De façon particulièrement préférée, le système d'ajustement est configuré pour opérer une translation rectiligne ou curviligne de chaque segment de guidage, pour l'ajustement de la section de guidage.

Les déplacements des différents segments d'un même palier de guidage peuvent être soit de même nature (parmi une rotation, une translation et une combinaison des deux), soit de nature différente.

Dans le cas de déplacements de même nature pour les différents segments, ceux-ci peuvent se déplacer selon des trajectoires identiques (à l'orientation du segment près), ou selon des trajectoires différentes.

Les faces primaires des segments, qui délimitent le canal de guidage, peuvent avoir des profils identiques ou différents.

Avantageusement, les faces primaires peuvent être au moins identiques par paire, notamment par paire de segments opposés.

Encore plus préférentiellement, les faces primaires de tous les segments sont identiques.

Comme indiqué précédemment, un canal de guidage selon l'invention est globalement fermé sur lui-même latéralement :
Si l'on considère un sens (horaire ou anti-horaire) autour de l'axe longitudinal du canal, alors chaque segment de guidage de rang N est accolé au segment de guidage de rang N+1 à un éventuel jeu près, fermant ainsi le canal de guidage.

Plus généralement, et quelle que soit la configuration de fonctionnement considérée, un jeu entre deux segments adjacents reste inférieur à une valeur définie aussi faible que possible afin notamment de limiter les fuites transversales de lubrifiant, mais suffisante pour garantir un jeu qui permette de compenser les imprécisions de positionnement des segments issues du système d'ajustement sur toute la plage de fonctionnement.

Le déplacement relatif des segments, lié au système d'ajustement, se fait avec ou sans contact et est tel qu'un jeu maximal entre deux segments adjacents reste globalement inchangé et, à tout le moins, contenu dans la ou les plages précitées.

Le fait que le canal de guidage soit fermé latéralement permet en outre, en présence d'huile, d'assurer une lubrification optimale.

Lors de l'ajustement de la section de guidage, un glissement relatif, avec ou sans contact, est opéré entre au moins une zone de jonction du segment de rang N et la face primaire du segment de rang N+1.

Selon la nature du déplacement relatif entre les segments, la zone de jonction peut être soit linéaire soit surfacique.

Comme exemple, la zone de jonction peut être une arête de jonction entre la face primaire et une face secondaire du même segment, adjacente à la face primaire.

Selon un exemple particulièrement préféré, les faces primaires des segments de guidage sont planes et chaque segment de guidage possède en outre une face secondaire plane, adjacente à ladite face primaire, et ladite face secondaire est parallèle à la face primaire du segment de guidage adjacent et configurée pour pouvoir se translater de façon rectiligne le long de ladite face primaire.

Enfin, la zone de jonction peut aussi être une zone du segment réalisée dans un matériau déformable, de préférence déformable élastiquement, adaptée pour se comprimer contre la face primaire du segment adjacent et ainsi réaliser une étanchéité entre les deux segments.

Le canal de guidage présente avantageusement une certaine périodicité angulaire (autour de son axe longitudinal, dans chaque configuration de fonctionnement) assurant un meilleur guidage bilatéral des barres.

Selon un exemple particulier, la section de guidage présente sensiblement une forme de polygone, de préférence une forme de polygone régulier. En particulier, les faces internes du canal, définissant la section de guidage, peuvent globalement former les côtés de ce polygone. Par sensiblement une forme de polygone, on entend ici une forme strictement polygonale, avec des côtés (formés par les parties actives de faces primaires) plans, ou une forme globalement polygonale, c'est-à-dire dont on peut définir plusieurs côtés plans et/ou incurvés juxtaposés, reliés entre eux - ou non - par une arête.

Selon une disposition avantageuse, la section de guidage est telle qu'un cercle inscrit à l'intérieur du canal de guidage touche au moins deux segments, de préférence au moins trois segments adjacents, encore préférentiellement tous les segments du dispositif de guidage.

Selon un exemple, le système d'ajustement de la section de guidage est configuré pour déplacer les segments de guidage sans modifier l'axe longitudinal du canal de guidage. Le déplacement des segments de guidage se fait selon une symétrie axiale : l'axe longitudinal du canal de guidage reste le même dans toutes les configurations de fonctionnement. On évite ainsi de devoir recentrer le canal de guidage sur l'axe de la machine de traitement à laquelle le dispositif est associé, entre chaque opération d'ajustement de la section de guidage.

Selon un exemple, le dispositif de guidage comprend une pluralité de paliers disposés successivement dans la direction longitudinale, et le système d'ajustement est configuré pour ajuster le positionnement transversal relatif des axes longitudinaux des canaux de guidage formés par ces paliers. En particulier, pour ajuster la trajectoire de la barre à travers le dispositif de guidage, le système peut ajuster un décalage transversal entre l'axe longitudinal d'au moins un canal de guidage et les axes longitudinaux d'un ou plusieurs autres paliers.

Le système d'ajustement de la section de guidage est avantageusement configuré pour déplacer tous les segments de guidage de manière synchrone.

Selon un exemple de réalisation, le système d'ajustement de la section de guidage comprend des moyens de déplacement individuel pour chaque segment de guidage.

Selon un exemple, un organe de commande centralisé (typiquement un axe de commande) peut être configuré pour entraîner de manière synchrone N axes correspondant respectivement aux N segments à déplacer.

Selon un autre exemple de réalisation, le système d'ajustement de la section de guidage est configuré pour déplacer activement l'un des segments de guidage dit segment directeur, et les segments de guidage sont agencés de sorte que ledit déplacement dudit segment directeur induise un déplacement correspondant des autres segments de guidage.

Avantageusement, le dispositif de guidage peut comporter un système de rappel rappelant les segments de guidage les uns vers les autres, pour éviter un écartement des segments lié à leur déplacement radial.

Selon une disposition particulière de l'invention, le dispositif de guidage comprend en outre au moins un accessoire de guidage déformable logé dans le canal de guidage et destiné à délimiter une cloison modulable à l'intérieur dudit canal. L'accessoire de guidage définit à l'intérieur du canal une paroi complémentaire de guidage destinée à épouser au plus près la forme de la barre entraînée, notamment lorsque la section de cette barre est non-circulaire.

Un accessoire de guidage peut être par exemple une feuille de guidage définissant, à l'intérieur du canal, une paroi complémentaire de guidage, courbe, par exemple un secteur angulaire de cylindre, de rayon de courbure pouvant varier en fonction des dimensions du canal de guidage. Plusieurs feuilles peuvent aussi être disposées dans le canal pour former ensemble une paroi complémentaire de guidage sensiblement continue, par exemple de section circulaire ou quasi-circulaire. Dans ce cas, le rayon de courbure de la paroi complémentaire de guidage est ajusté par déplacement transversal de la ou des feuilles.

Un accessoire de guidage peut aussi être un élément creux, une ouverture destinée à recevoir la barre et déformable élastiquement de sorte à pouvoir épouser la forme de ladite barre. Un tel accessoire peut par exemple être réalisé en gomme.

Selon une disposition particulière, le dispositif de guidage peut en outre comprendre des moyens de détection de la qualité de guidage à l'intérieur du dispositif de guidage, notamment au cours du déplacement (en rotation et/ou en translation) de ladite barre à l'intérieur du canal de guidage. Le système d'ajustement de diamètre peut alors être configuré pour ajuster le diamètre de la section de guidage en fonction de la qualité de guidage ainsi déterminée. Cette disposition permet de corriger le comportement de la barre. La qualité de guidage est notamment corrélée à la taille d'un interstice entre une barre logée dans le canal de guidage et les segments de guidage de chaque palier.

La détection de la qualité de guidage peut se faire en conditions opérationnelles, par exemple en mesurant certains paramètres de fonctionnement comme le couple d'entrainement de la machine ou l'intensité vibratoire, par exemple mesurée par un accéléromètre (par exemple piézoélectrique ou capacitif ou piézorésistif) ou par un capteur de proximité (par exemple optique, capacitif ou inductif), avantageusement placé le long de l'arbre machine.

Selon une disposition avantageuse, le dispositif de guidage comprend en outre un système d'ouverture du canal de guidage, ledit système d'ouverture comprenant des moyens de déplacement transversal d'au moins l'un des segments de guidage vers une configuration ouverte (i.e. avec une largeur d'ouverture correspondant au diamètre du canal de guidage) ou partiellement ouverte, dans laquelle le canal de guidage est ouvert latéralement.

Selon un exemple, le palier est hydrodynamique, et le dispositif de guidage comporte en outre des moyens d'amenée d'huile à l'intérieur dudit canal.

Dans ce cas, pour maintenir l'huile à l'intérieur du canal de guidage, le dispositif de guidage peut en outre comprendre au moins un moyen de fermeture adaptable à au moins une extrémité longitudinale, de préférence aux deux extrémités longitudinales, du canal de guidage (ou du passage de guidage, le cas échéant).

Selon un exemple, chaque palier a une longueur égale à au moins 1,5 fois le diamètre nominal du canal de guidage correspondant, de préférence au moins 2 fois ce diamètre nominal, encore plus préférentiellement au moins 3 fois ce diamètre nominal, encore plus préférentiellement égale à au moins 10 fois ce diamètre nominal. Le diamètre nominal du canal de guidage est le diamètre du plus grand cercle inscrit à l'intérieur de la plus grande section du guidage du canal (i.e. de la plus grande section du canal à l'intérieur de sa gamme de réglage).

Cette disposition est particulièrement avantageuse dans les dispositifs de guidage hydrodynamiques, dans lesquels la portance de la barre résulte de la pression du fluide (généralement de l'huile) à l'intérieur du palier. Pour que cette pression puisse être obtenue, il est important que le ou chaque palier ait une certaine longueur. Si la longueur est trop faible, et sous l'effet de l'augmentation de pression, l'huile s'échappe par les extrémités longitudinales du palier, rendant ainsi le système moins efficace, voire inefficace. Une longueur relativement importante du palier permet également de limiter la quantité d'huile nécessaire et donc la consommation énergétique globale du dispositif.

L'invention concerne également un ravitailleur de barres comprenant un dispositif de guidage tel que défini précédemment.

Selon un exemple, le ravitailleur de barres comprend en outre un poussoir de barre muni d'un drapeau d'entraînement, et le dispositif de guidage comprend un système d'ouverture configuré pour déplacer au moins l'un des segments de guidage vers une configuration ouverte ou partiellement ouverte (avec une ouverture suffisante pour faire passer le drapeau dont l'encombrement radial est généralement inférieur au diamètre de la barre) dans laquelle le canal de guidage présente au moins une ouverture latérale agencée pour permettre le passage du drapeau d'entraînement.

Selon un exemple, le ravitailleur de barres comprend en outre un magasin de barres, et le dispositif de guidage comprend un système d'ouverture configuré pour déplacer au moins l'un des segments de guidage vers une configuration ouverte dans laquelle le canal de guidage présente au moins une ouverture latérale agencée pour permettre l'entrée d'une nouvelle barre depuis ledit magasin de barres.

### Brève description des dessins

Dans la description qui suit, divers modes de réalisation de l'invention sont décrits en référence aux figures suivantes :
- La figure 1 est une représentation schématique, partielle et en perspective, d'un palier à cinq segments selon un mode de réalisation de l'invention, dans lequel l'ajustement est typiquement réalisé par translation rectiligne de chaque segment.
- La figure 2 illustre le palier de la figure 1, dans une configuration de fonctionnement différente.
- La figure 3 est une vue de face d'un palier à trois segments, dans lequel l'ajustement est réalisé par translation rectiligne de chaque segment.
- La figure 4 est une vue en perspective d'un dispositif de guidage selon l'invention, comprenant un unique palier à quatre segments mobiles en translation rectiligne.
- Les figures 5A à 5C illustrent le dispositif de guidage de la figure 4 en vue de face et respectivement dans deux configurations différentes de fonctionnement (figures 5A et 5C) et dans une étape de chargement (figure 5B).
- La figure 6 illustre un palier à quatre segments, dans lequel l'ajustement est réalisé par pivotement de chaque segment autour d'un axe de pivotement propre.
- La figure 7 illustre un palier à trois segments, dans lequel l'ajustement est réalisé par translation curviligne de chaque segment.
- La figure 8 illustre, en perspective, un palier à quatre segments, muni de feuilles de guidage juxtaposées longitudinalement, permettant notamment de faire tourner des barres non circulaires dans le canal de guidage.
- La figure 9 illustre, en vue de face, un palier à quatre segments, muni de quatre feuilles de guidage juxtaposées transversalement et permettant notamment de faire tourner des barres non circulaires dans le canal de guidage.
- La figure 10 illustre, en vue de face, un palier à quatre segments comprenant un accessoire de guidage déformable.
- La figure 11 est une vue schématique d'un ravitailleur de barres incluant un dispositif de guidage selon l'invention et agencé pour alimenter en barre une machine-outil située en aval.

Sur les figures, les mêmes références sont utilisées pour des éléments similaires ou correspondants.

### Description détaillée de l'invention

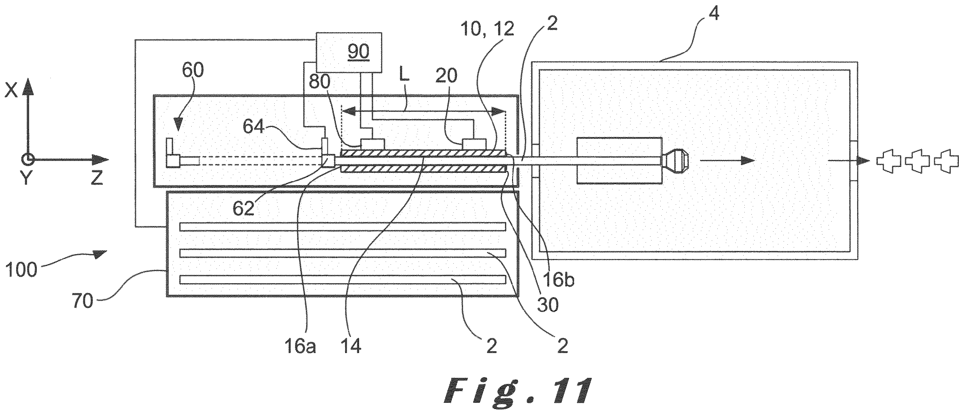

La figure 11 est une illustration schématique d'un ravitailleur de barres 100 destiné à approvisionner en barres 2 de grande longueur une machine-outil 4, typiquement un tour d'usinage.

Le ravitailleur de barre 100 comprend :
- un dispositif de guidage 10 comprenant au moins un palier 12 pour le guidage des barres 2 vers la machine-outil 4,
- un système de poussoir 60 destiné à entraîner la barre chargée 2 à travers le dispositif de guidage 10,
- un dispositif d'alimentation en barres (magasin) 70 contenant une pluralité de barres 2 en attente,
- éventuellement un circuit de lubrification 80 pour l'amenée d'huile lubrifiante à l'intérieur du dispositif de guidage 10, et
- un système électronique 90 de synchronisation des éléments précités.

Dans la suite, la direction longitudinale dans laquelle sont déplacées les barres 2 à l'intérieur du ravitailleur 100 et du dispositif de guidage 10 est notée Z. Les termes amont et aval sont utilisés en référence à cette direction de déplacement des barres 2 vers la machine-outil 4.

Dans la suite, un plan X-Y orthogonal à cette direction longitudinale Z est appelé plan transversal, et une dimension considérée dans ce plan est une dimension transversale ou largeur. On définit également le déplacement transversal d'un élément par sa trajectoire projetée dans un tel plan transversal.

Selon l'invention, le dispositif de guidage 10 comprend au moins un palier 12 qui forme un canal de guidage 14 présentant, dans un plan transversal, une section dite section de guidage. La section de guidage est typiquement constante sur toute la longueur du ou de chaque palier 12, dans une configuration de fonctionnement donnée du dispositif 10.

Pour assurer un guidage optimal des barres 2, la section de guidage doit correspondre, au jeu près, au diamètre de chaque barre 2 entraînée. Le dispositif de guidage 10 selon l'invention comprend pour cela un système d'ajustement 20 de la section de guidage, qui sera décrit plus en détail dans la suite.

Le dispositif de guidage 10 illustré sur la figure 11 comprend un unique palier 12 destiné à guider une barre 2 lors de son déplacement longitudinal vers la machine-outil 4.

Comme alternative cependant, le dispositif de guidage 10 pourrait aussi comprendre une pluralité de paliers 12 de même longueur ou de longueurs différentes, juxtaposés en direction longitudinale Z, de préférence sans espace intermédiaire de façon à constituer un passage de guidage continu.

Chaque palier a de préférence une longueur égale à au moins 1,5 fois, de préférence au moins 2 fois, encore plus préférentiellement au moins 3 fois et encore plus préférentiellement au moins 10 fois le diamètre du canal de guidage correspondant, de sorte à former à lui seul un palier dit « long » au regard des paliers hydrodynamiques.

En cas de pluralité de paliers 12, chaque palier devra aussi avoir une longueur de préférence égale à au moins 1,5 fois, de préférence au moins 2 fois, encore plus préférentiellement au moins 3 fois et encore plus préférentiellement au moins 10 fois le diamètre du canal de guidage formé par ce palier, en raison des éventuels risques de fuite entre paliers 12.

Le nombre de paliers est généralement limité pour des raisons économiques (un palier a avantageusement une longueur minimum supérieure à 20%, de préférence supérieure à 30% de la somme des longueurs de tous les paliers) pour limiter le nombre d'actuateurs et de mécanismes de commande du système d'ajustement de section.

Dans l'exemple illustré, le palier 12 est hydrodynamique, et le dispositif de guidage comporte en outre des moyens d'amenée d'huile 80 à l'intérieur du canal de guidage 14.

Dans ce cas, pour maintenir l'huile à l'intérieur du canal 14, le dispositif de guidage 10 peut par exemple comprendre des moyens de fermeture adaptables 16a, 16b à ses extrémités longitudinales (voir figure 11).

On note Z1 l'axe longitudinal d'un canal de guidage 14 dans une configuration de fonctionnement donnée. En présence d'une pluralité de paliers 12, les axes des différents canaux de guidage 14 sont de préférence confondus, mais ils pourraient aussi être légèrement excentrés les uns par rapport aux autres, de manière soit fixe soit réglable, pour ajuster le guidage des barres 2.

Chaque palier 12 du dispositif de guidage 10 selon l'invention comprend au moins trois segments de guidage 30 s'étendant longitudinalement et disposés de sorte à définir, entre eux, le canal de guidage 14.

Dans l'exemple de la figure 11 mentionnée précédemment, les segments de guidage 30 du palier 12 ont tous la même longueur, qui correspond à la longueur L du palier.

Le nombre, la forme, les degrés de liberté des segments 30 peuvent varier, comme illustrés notamment par les différents exemples de réalisation qui seront décrits ci-après.

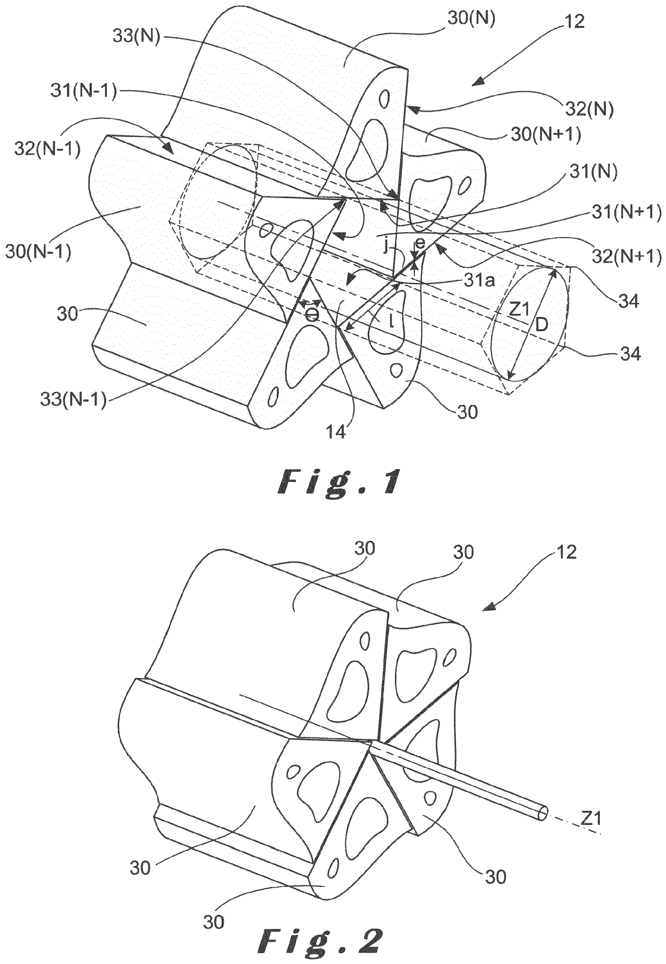

Un palier 12 selon un premier exemple de réalisation est illustré sur les figures 1 et 2.

Le palier 12 comprend ici cinq segments identiques 30, respectivement de rang 1 à 5, disposés en rosace, et délimitant entre eux un canal de guidage 14 d'axe Z1 et de section de guidage en polygone régulier. Le polygone ayant autant de côtés que le palier 12 inclut de segments 30, la section de guidage est donc ici pentagonale.

Chaque segment 30 présente une forme de prisme s'étendant longitudinalement, et est délimité transversalement par au moins une face primaire 31 et une face secondaire 32, adjacentes l'une à l'autre. Dans l'exemple particulier représenté, les faces primaires et secondaires sont planes, reliées par une arête de jonction 33 parallèle à l'axe Z1. Les faces primaire 31 et secondaire 32 forment l'une avec l'autre un angle θ égal à 72°, c'est-à-dire 360/N, avec N le nombre de segments égal à 5.

Chaque segment de rang N recouvre partiellement le segment de rang N+1 et le segment de rang N est lui-même recouvert partiellement par le segment de rang N-1.

Plus particulièrement, chaque segment de rang N recouvre partiellement la face primaire 31 du segment de rang N+1 et la face primaire 31 du segment de rang N est lui-même recouvert partiellement par le segment de rang N-1.

En référence à une configuration de fonctionnement donnée, on appelle parties actives 31 a des faces primaires 31 les parties de ces faces qui ne sont pas couvertes/fermées par un segment 30 adjacent, et qui délimitent le canal de guidage 14.

Dans l'exemple particulier considéré, la section de guidage étant un polygone régulier, les parties actives 31a des différents segments 30 ont toutes la même largeur l dans une configuration de fonctionnement donnée. L'angle entre deux parties actives adjacentes est égal à 180°- θ. Comme illustré sur la figure 1, les segments 30 sont donc agencés selon une certaine périodicité angulaire, d'angle 360/N°, autour de l'axe Z1, et notamment une symétrie axiale en cas de nombre de segments paire. Chaque segment 30 est disposé de sorte que sa face secondaire 32 soit parallèle à la face primaire 31 du segment 30 adjacent et configurée pour pouvoir glisser le long de ladite face primaire 31, soit directement contre ladite face - c'est-à-dire avec contact -, soit sans contact, comme illustré sur la figure 1.

Lors de l'ajustement, chaque segment de guidage 30 est ici déplacé en translation rectiligne, dans une direction transversale donnée.

Pour la suite, on définit par plan primaire P1 d'un segment 30 le plan dans lequel est définie sa face primaire 31. On appelle sommet de guidage 34 l'intersection entre les plans primaires de deux segments 30 adjacents.

Dans le cas où deux segments adjacents 30 glissent l'un contre l'autre, sans contact, le sommet de guidage 34 et l'arête de jonction 33 sont confondus.

Dans le cas où au contraire, comme sur la figure 1, le sommet de guidage 34 et l'arête de guidage 33 sont espacés (autrement dit la face secondaire 32 d'un segment de rang N et la face primaire 31 du segment de rang N+1 sont distantes l'une de l'autre), la distance e entre eux correspond à un jeu de fonctionnement j entre les segments 30, qui est petit vis-à-vis de la dimension transversale minimale des parties actives 31a des segments, c'est-à-dire de la largeur des côtés du polygone. De façon avantageuse, et dans chaque position de fonctionnement, la distance e minimale mesurée entre deux segments adjacents est 50 fois inférieur au diamètre D du canal 14, de préférence 500 fois inférieur au diamètre nominal du canal 14. Ce jeu e entre deux segments adjacents est typiquement compris entre 10 et 500 microns.

Le diamètre D du canal 14, dans une configuration de fonctionnement donnée, est le diamètre du plus grand cercle inscrit à l'intérieur de la section de guidage. Le diamètre dit nominal du canal est le diamètre du plus grand cercle inscrit à l'intérieur de la plus grande section de guidage pouvant être obtenue avec le système d'ajustement 20.

Comme indiqué précédemment, l'invention prévoit de munir le dispositif de guidage 10 d'un système 20 d'ajustement de la section de guidage de chaque palier, par déplacement relatif des segments de guidage 30 les uns par rapport aux autres, dans le but d'ajuster la dimension transversale de chaque partie active.

Le système d'ajustement 20 permet de moduler l'agencement relatif des segments 30 à la manière d'une iris mécanique.

En faisant glisser les segments 30 les uns par rapport aux autres, on augmente ou on diminue la largeur des côtés de la section de guidage, et on modifie de façon correspondante le diamètre D du cercle inscrit à l'intérieur de ladite section. C'est ce diamètre D que l'on essaiera de faire tendre vers le diamètre de la barre 2 à guider, lors de l'ajustement.

Dans le cas d'un polygone régulier comme dans l'exemple illustré sur la figure 1, l'ajustement de la section de guidage est une homothétie, en ce sens que la forme de la section reste inchangée, notamment le nombre de côtés, l'angle entre deux côtés adjacents, et le rapport dimensionnel entre les différents côtés, mais la dimension absolue de chaque côté de la section est augmentée ou diminuée d'un même facteur.

La figure 2 illustre le palier 12 de la figure 1 dans une configuration de fonctionnement dans laquelle le diamètre D de la section de guidage est beaucoup plus faible que sur la figure 1. On voit bien que les angles entre segments sont conservés, de même que le nombre de côtés de la section de guidage. Seule la dimension transversale l de chaque partie active 31a a été modifiée.

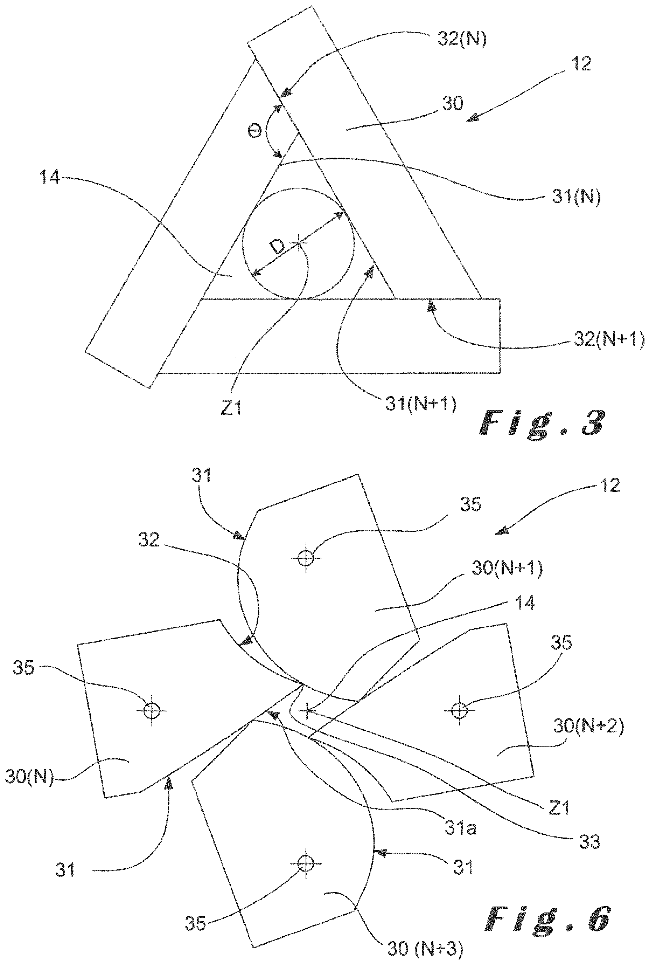

Un dispositif de guidage similaire à celui des figures 1 et 2 peut être réalisé avec un nombre différent de segments de guidage 30. Ainsi par exemple, la figure 3 illustre un palier 12 comprenant trois segments 30 identiques, présentant chacun une face primaire 31 plane et une face secondaire 32 également plane, reliées par une arête de jonction 33. Les faces primaire et secondaire forment un angle θ égal à 120°, c'est-à-dire 360/N, avec N le nombre de segments égal à 3. Là aussi, les segments 30 sont configurés pour se translater de façon rectiligne, les uns par rapport aux autres. La section de guidage est un triangle équilatéral, dont la largeur des côtés varie selon l'ajustement réalisé.

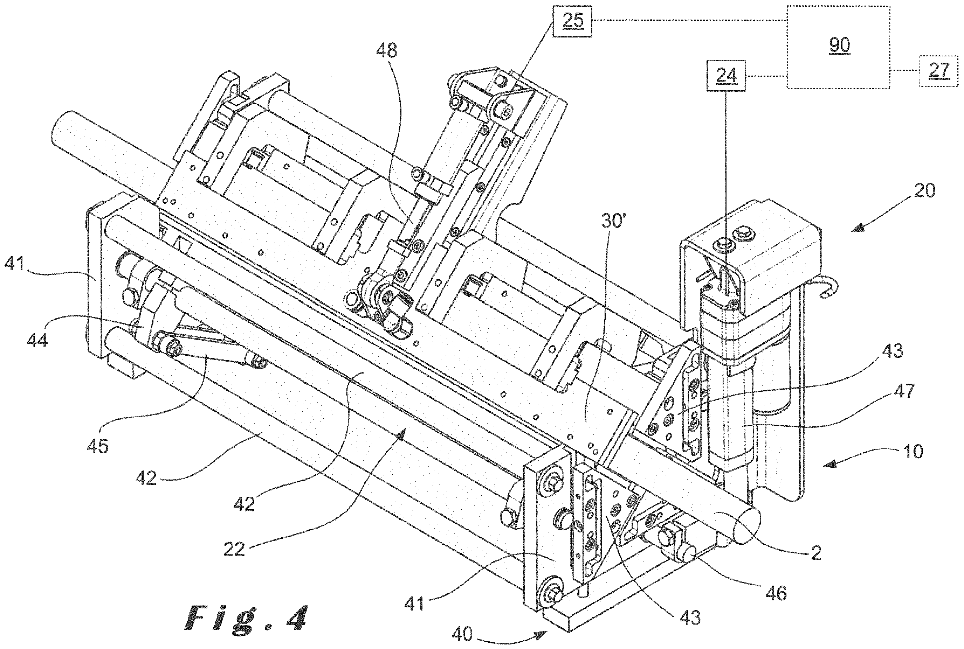

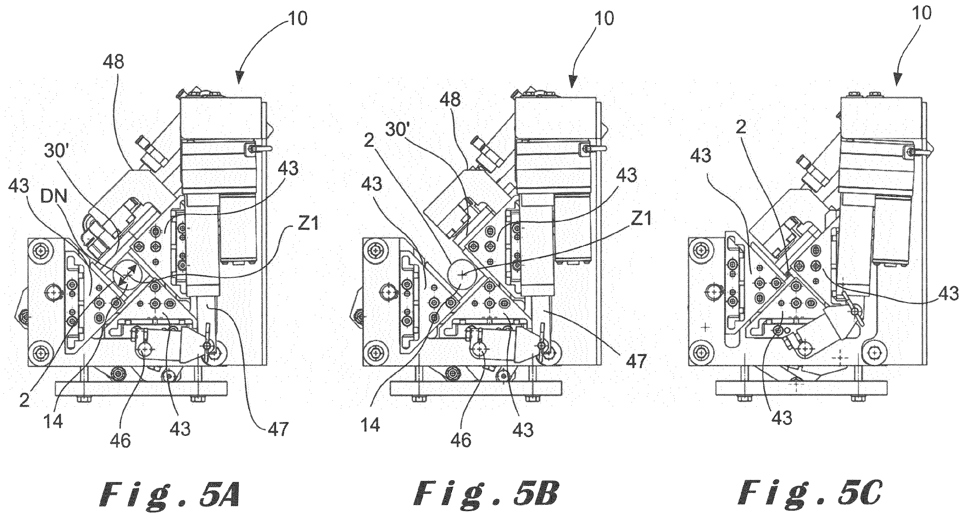

Les figures 4 et 5 illustrent un dispositif de guidage 10 similaire, à quatre segments de guidage 30 délimitant entre eux un canal de guidage 14 à section carrée.

Un exemple de système d'ajustement 20 va être décrit plus en détail en lien avec ce dispositif de guidage 10.

Il comprend :
- un système mécanique d'entraînement 22 permettant de déplacer les segments de guidage 30, et
- un système de commande 24, actionnant ce système d'entraînement 22.

Dans l'exemple particulier illustré, le dispositif de guidage comprend un châssis 40 avec deux flasques 41 et des entretoises 42 supportant des guides 43 assurant le déplacement des segments de guidage 30.

Le système mécanique d'entraînement 22 comprend un ensemble de leviers à cames 44 pilotant les segments 30 et synchronisés par un système de biellettes 45 à partir d'un axe central de commande 46 mis en mouvement par un vérin d'ajustement de la section de guidage 47. Le vérin d'ajustement 47 est relié au système de commande 24 du système d'ajustement 20, lui-même relié au système de synchronisation plus globale 90 du ravitailleur de barre 100.

Les figures 5A et 5C illustrent l'action du vérin d'ajustement de section 47, et le passage du dispositif d'une configuration de fonctionnement à diamètre maximal (nominal DN) (5A) à une configuration de faible diamètre (5C).

On note que le système d'ajustement 20 est ici configuré pour déplacer tous les segments de guidage 30 de manière synchrone ou quasi-synchrone. Le vérin 47 agit sur l'axe central de commande 46 qui répercute le mouvement sur l'ensemble des segments 30 grâce au système mécanique d'entraînement 22.

Comme alternative, le système d'ajustement 20 pourrait comprendre des moyens de déplacement individuel pour chaque segment de guidage 30. Comme autre variante, le système d'ajustement 20 pourrait être configuré pour déplacer activement l'un des segments de guidage 30 dit segment directeur, ledit déplacement induisant un déplacement correspondant des autres segments de guidage 30. Également, il pourrait être prévu un système de rappel (non illustré) rappelant les segments de guidage 30 les uns vers les autres, de sorte à mieux contrôler les dimensions des jeux entre segments 30.

Dans l'exemple particulier présenté sur les figures 4 et 5, trois segments de guidage 30 sont identiques alors que le quatrième, que l'on appellera le segment d'ouverture ou couvercle, noté 30' sur les figures 4 et 5A et 5B, est utilisé pour garantir une fonction d'ouverture du palier 12, notamment pour le chargement d'une nouvelle barre 2 depuis le magasin 70. Comme illustré sur la figure 5B, le segment d'ouverture 30' est piloté par un vérin d'ouverture dédié 48, piloté par un système de commande d'ouverture 25, également relié au système de synchronisation 90.

Comme illustré sur la figure 11, le ravitailleur de barres 100 peut comprendre un poussoir 60 par exemple muni d'une pince 62 destinée à maintenir la barre 2 par son extrémité amont, et un drapeau d'entraînement 64. Dans ce cas, une configuration ouverte ou partiellement ouverte du palier de guidage 12, permise par le système d'ouverture 25, 48 peut aussi permettre le passage du drapeau d'entraînement 64, notamment dans le cas où le dispositif de guidage 10 comprend plusieurs paliers de guidage juxtaposés, lesquels sont alors ouverts les uns après les autres au fur et à mesure de l'avancement de la barre 2, de sorte à laisser passer le drapeau de guidage 64.

Selon une autre disposition avantageuse, le dispositif de guidage peut en outre comprendre des moyens de détection 27 de la qualité du guidage, notamment au cours du déplacement de ladite barre 2 à l'intérieur du canal de guidage 14, par exemple des organes de mesure du couple d'entrainement de la machine associée ou de l'intensité vibratoire, typiquement un accéléromètre (par exemple piézoélectrique ou capacitif ou piézorésistif) ou un capteur de proximité (par exemple optique, capacitif ou inductif).

Les moyens de détection 27 sont reliés au système de synchronisation 90, qui ensuite agit sur le système d'ajustement 20 pour procéder au réglage nécessaire. Cette disposition peut permettre de corriger le comportement de la barre 2 et/ou d'adapter la qualité du guidage selon les déplacements latéraux de ladite barre 2.

Un palier 12 selon un quatrième exemple de réalisation est illustré sur la figure 6.

Dans cet exemple, le palier 12 comprend quatre segments de guidage 30, identiques deux à deux. Deux segments 30 de rang respectivement N et N+2 ont une face primaire 31 plane et une face secondaire 32 concave, et deux segments de rang N+1 et N+3 ont une face primaire 31 convexe et une face secondaire 32 plane. L'arête de jonction 33 d'un segment de rang N jouxte la face primaire 31 du segment de rang N+1, avec ou sans contact. Chaque segment 30 est monté pivotant autour d'un axe de pivotement fixe 35, parallèle à la direction longitudinale Z. En opérant un pivotement synchrone des quatre segments 30, le système d'ajustement 20 modifie les dimensions transversales des parties actives 31a des faces primaires 31.

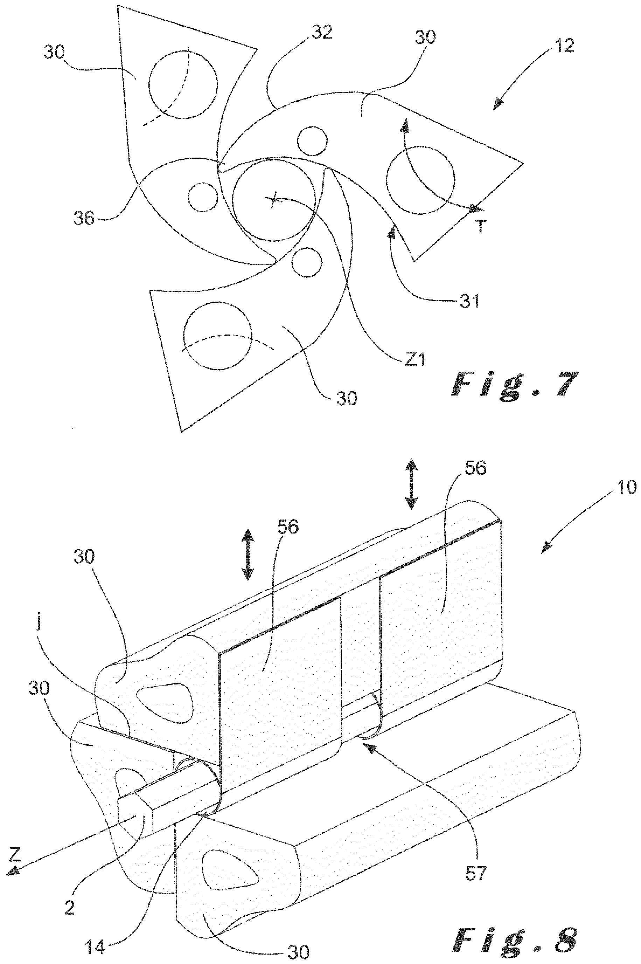

Un palier 12 selon un cinquième exemple de réalisation est illustré sur la figure 7.

Dans cet exemple, le palier 12 comprend trois segments de guidage 30 identiques, de forme globale en griffe, présentant chacun une face primaire 31 courbe et une face secondaire 32 également courbe, reliées par une zone de jonction 36 jouxtant la face secondaire 32 d'un segment adjacent. Chaque segment 30 est mobile en translation, selon une trajectoire curviligne, notamment en arc de cercle, telle que représentée par la flèche T sur la figure 7.

Dans l'exemple particulier représenté, en outre, la zone de jonction 36 a la particularité d'être réalisée dans un matériau déformable, adapté pour se comprimer contre le segment adjacent et assurer une bonne étanchéité entre les segments.

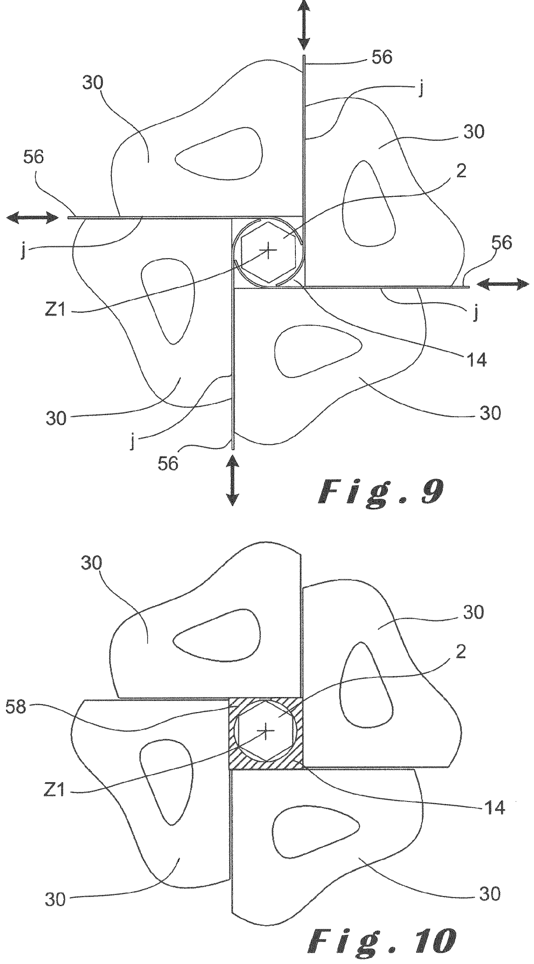

Pour assurer une bonne étanchéité entre les segments 30, le dispositif de guidage pourrait aussi comprendre un organe de raclage dédié fixé sur la face primaire 31 et/ou la face secondaire 32, tel qu'un racleur en tôle souple. La figure 9, qui sera décrite dans la suite, illustre un cas particulier d'une telle variante.

Un sixième exemple de réalisation est illustré sur la figure 8.

Le dispositif de guidage 10 comprend ici un palier 12 à quatre segments 30 (dont un a été supprimé pour permettre de visualiser l'intérieur du canal de guidage 14), et des feuilles de guidage 56, déformables, dont chacune pénètre dans le canal de guidage 14 à travers un interstice j défini entre deux segments de guidage 30. Chaque feuille 56 est recourbée ou enroulée à l'intérieur du canal de guidage 14 de sorte à y former une paroi complémentaire de guidage destinée à épouser au plus près la forme de la barre entraînée 2, notamment lorsque la section de cette barre 2 est non-circulaire.

Dans l'exemple de la figure 8, deux feuilles 56 sont agencées l'une à la suite de l'autre dans la direction longitudinale Z et chaque feuille 56 est enroulée sur elle-même pour former un tube de diamètre égal au diamètre du canal de guidage 14. La position de chaque feuille 56 peut être ajustée à travers l'interstice j par un mouvement transversal selon les flèches noires. Comme illustré, les feuilles 56 sont typiquement distantes l'une de l'autre dans la direction longitudinale Z. L'espace 57 entre les deux feuilles permet l'alimentation en huile du palier 12, le cas échéant.

Dans l'exemple de la figure 9, le dispositif 10 comprend un nombre n (ici n=4) de feuilles 56 pénétrant à l'intérieur du canal de guidage 14 respectivement par un interstice. A l'intérieur du canal de guidage 14, chaque feuille 56 est recourbée de sorte à former une paroi concave, en arc de cercle ou non, pouvant varier en fonction des dimensions du canal 14. Plusieurs feuilles peuvent aussi être disposées dans le canal 14 pour former ensemble une paroi complémentaire de guidage de section par exemple globalement circulaire. La position des feuilles 56 est ajustée à travers les interstices j par un mouvement transversal selon les flèches noires.

Comme variante, le dispositif de guidage 10 pourrait comprendre un ou plusieurs autres accessoires de guidage, déformables, logé(s) à l'intérieur du canal de guidage 14. On peut par exemple placer dans le canal de guidage 14 un adaptateur en gomme 58 définissant une ouverture centrale destinée à recevoir les barres à guider, comme illustré sur la figure 10, ou tout autre matériau déformable.

## Revendications

1. Dispositif de guidage (10) pour ravitailleur de barres (100), comprenant:
- au moins un palier (12) définissant un canal de guidage (14) à contour globalement fermé s'étendant en continu dans une direction longitudinale (Z) et présentant, dans un plan transversal (X-Y) à la direction longitudinale (Z), une section dite section de guidage, et
- un système (20) d'ajustement de ladite section de guidage, **caractérisé en ce que** le palier (12) comprend au moins trois segments de guidage (30) munis chacun d'une face primaire (31), et une partie active (31a) de chaque face primaire (31) délimite, avec les parties actives (31a) des faces primaires (31) des autres segments de guidage (30) un canal formant canal de guidage (14), et le système d'ajustement (20) est configuré pour déplacer les segments de guidage (30) les uns par rapport aux autres de sorte à ajuster une dimension transversale de chaque partie active (31a) .

2. Dispositif de guidage (10) selon la revendication 1, dans lequel la section de guidage présente une forme de polygone régulier.

3. Dispositif de guidage (10) selon la revendication 1 ou 2, dans lequel le système d'ajustement (20) est configuré pour opérer une translation rectiligne ou curviligne de chaque segment de guidage (30) pour l'ajustement de la section de guidage.

4. Dispositif de guidage (10) selon l'une quelconque des revendications 1 à 3, comprenant en outre un système d'ouverture (47) du canal de guidage (14), ledit système d'ouverture comprenant des moyens (48) de déplacement transversal d'au moins l'un des segments de guidage (30) vers une configuration ouverte ou partiellement ouverte dans laquelle le canal de guidage (14) est ouvert latéralement.

5. Dispositif de guidage (10) selon l'une quelconque des revendications 1 à 4, comprenant en outre des moyens (80) d'amenée d'huile à l'intérieur du canal de guidage (14).

6. Dispositif de guidage (10) selon l'une quelconque des revendications 1 à 5, dans lequel chaque segment de guidage (30) présente une zone de jonction (36) par laquelle il coopère par contact avec un segment adjacent (30), et ladite zone de jonction comprend des moyens déformables adaptés pour se comprimer contre le segment de guidage adjacent (30).

7. Dispositif de guidage (10) selon l'une quelconque des revendications 1 à 6, comprenant en outre au moins un accessoire de guidage déformable (56, 58) logé dans le canal de guidage (14) et destiné à délimiter une cloison modulable à l'intérieur dudit canal (14).

8. Dispositif de guidage (10) selon l'une quelconque des revendications 1 à 7, dans lequel le système d'ajustement (20) de la section de guidage est configuré pour déplacer tous les segments de guidage (30) de manière synchrone.

9. Dispositif de guidage (10) selon l'une quelconque des revendications 1 à 8, dans lequel le système d'ajustement (20) de la section de guidage comprend des moyens de détection et de réglage de la qualité de guidage à l'intérieur du dispositif de guidage, notamment au cours du déplacement d'une barre (2) à l'intérieur du canal de guidage (14).

10. Dispositif de guidage (10) selon l'une quelconque des revendications 1 à 9, dans lequel le système d'ajustement (20) de la section de guidage est configuré pour déplacer les segments de guidage lors de l'ajustement sans modifier l'axe longitudinal (Z1) du canal de guidage (14).

11. Dispositif de guidage (100) selon l'une quelconque des revendications 1 à 10, dans lequel chaque palier (12) a une longueur égale à au moins 1,5 fois, de préférence à au moins 2 fois, encore préférentiellement à au moins 3 fois, encore plus préférentiellement à au moins 10 fois le diamètre nominal du canal de guidage (14).

12. Dispositif de guidage (100) selon l'une quelconque des revendications 1 à 11, dans lequel le jeu (e) entre deux segments (30) adjacents est 50 fois inférieur au diamètre nominal du canal de guidage (14), de préférence 500 fois inférieur au diamètre nominal du canal de guidage (14).

13. Ravitailleur de barres (100) comprenant un dispositif de guidage (10) selon l'une quelconque des revendications précédentes.

14. Ravitailleur de barres (100) selon la revendication 13, comprenant en outre un magasin de barres (70), et le dispositif de guidage (10) comprend un système d'ouverture (47) configuré pour déplacer au moins l'un des segments de guidage (30) vers une configuration ouverte dans laquelle le canal de guidage (14) présente au moins une ouverture latérale agencée pour permettre l'entrée d'une nouvelle barre (2) depuis ledit magasin de barres (70).
